# EUROPÄISCHE PATENTANMELDUNG

(11) **EP 1 605 327 A2**
(43) Veröffentlichungstag der Anmeldung: **14.12.2005**
(21) Anmeldenummer: 05011998.1
(22) Anmeldetag: 03.06.2005
(51) Int. Cl.: G05D 23/13

(54) **Sanitäres Thermostatventil**

(30) Priorität: 09.06.2004 DE 102004028062
(71) Anmelder: HANSA METALLWERKE AG, 70567 Stuttgart (DE)
(72) Erfinder: Assenmacher, Bernd, 70597 Stuttgart (DE); Kunkel, Horst, 70199 Stuttgart (DE); Käfer, Markus, 71636 Ludwigsburg (DE); Schmid, Lars, 72622 Nürtingen (DE); Weinmann, Werner, 70794 Filderstadt (DE)
(74) Vertreter: Ostertag, Ulrich

(57) **Zusammenfassung**

Ein sanitäres Thermostatventil (1) besitzt in bekannter Weise eine Gehäuse (2), das einen Kaltwasserzulauf (3), einen Warmwasserzulauf (4) und einen Mischwasserauslauf aufweist. In dem Gehäuse (2) befindet sich ein temperaturempfindliches und vom Mischwasser anströmbares Thermostatelement (8), das seinerseits ein Mischventil ansteuert. Das Einstellorgan (10 bis 14) des Thermostatventils (1), mit dem durch eine Verschiebung des Thermostatelements (8) im Gehäuse (2) die Solltemperatur des Mischwassers eingestellt werden kann, wird von einem elektrischen Linearaktuator (15) beaufschlagt. Dessen sich linear bewegendes Ausgangsorgan (19) ist direkt mit dem Einstellorgan (10 bis 14) verbunden. Dieses Thermostatventil (1) baut sehr klein und ist verhältnismäßig kostengünstig.

## Beschreibung

Die Erfindung betrifft ein sanitäres Thermostatventil mit
a) einem Gehäuse, das einen Kaltwasserzulauf, einen Warmwasserzulauf und einen Mischwasserauslauf besitzt;
b) einem im Gehäuse angeordneten, temperaturempfindlichen und vom Mischwasser anströmbaren Thermostatelement;
c) einem vom Thermostatelement gesteuerten Mischventil;
d) einem Einstellorgan für die Solltemperatur des Mischwassers, mit dem die Position des Thermostatelements im Gehäuse veränderbar ist;
e) einer elektrischen Betätigungseinrichtung für das Einstellorgan.

Mit zunehmenden Anforderungen an den Komfort im Badezimmer werden sanitäre Thermostatventile der oben genannten Art immer beliebter, die sich dafür eignen, auf elektrische Steuersignale hin die Solltemperatur des Mischwassers, beispielsweise in Duschen, zu verändern. Bisher wurden als elektrische Betätigungseinrichtungen verhältnismäßig groß bauende und teure Getriebemotoren eingesetzt, deren Ausgangswelle das Einstellorgan des sanitären Thermostatelements verdrehte. Diese Verdrehung des Einstellorganges wurde dann mit Hilfe eines Gewindes in eine Linearbewegung des Einstellorganges und damit letztendlich in eine Linearbewegung des Thermostatelementes innerhalb des Gehäuses umgesetzt.

Aufgabe der vorliegenden Erfindung ist es, ein sanitäres Thermostatventil der eingangs genanten Art zu schaffen, das kleiner baut und kostengünstiger ist.

Diese Aufgabe wird erfindungsgemäß dadurch gelöst, dass
f) das elektrische Betätigungsorgan ein Linearaktuator ist, dessen sich linear bewegendes Ausgangsorgan direkt mit dem Einstellorgan verbunden ist.

Elektrische Linearaktuatoren sind verhältnismäßig preiswert im Handel erhältlich; sie bauen vergleichsweise klein.
Ihr Ausgangsorgan führt bereits die Linearbewegung durch, die zur Verschiebung des Thermostatelementes innerhalb des Gehäuses des Thermostatventiles erforderlich ist.

Besonders bevorzugt werden Linearaktuatoren, die einen elektrischen Schrittmotor mit mehreren Statorwicklungen und einen Rotor umfassen, wobei der Rotor ein Gewinde trägt, das in einem komplementären Gewinde eines Gehäuseteils verschraubbar ist, wodurch der Rotor zum sich linear in Achsrichtung bewegenden Ausgangsorgan wird. Ein derartiger Schrittmotor lässt sich mit einzelnen Stromimpulsen ansteuern. Durch jeden Stromimpuls wird der Rotor um einen bestimmten Winkelbetrag verdreht, was sich auf Grund des Gewindes in einen bestimmten Betrag der Axialbewegung des Rotors umsetzt. Durch die Anzahl der Impulse, mit denen die Statorwicklungen des Schrittmotors bestromt werden, lässt sich also die Gesamtstrecke der Verschiebung des Thermostatelementes präzise bestimmen. Handelsübliche Schrittmotoren sind ohne Weiteres in der Lage, an ihrem Rotor ein Drehmoment zu erzeugen, das - nach Umsetzung in die Linearbewegung - eine zur Verschiebung des Thermostatelementes ausreichende Kraft ergibt.

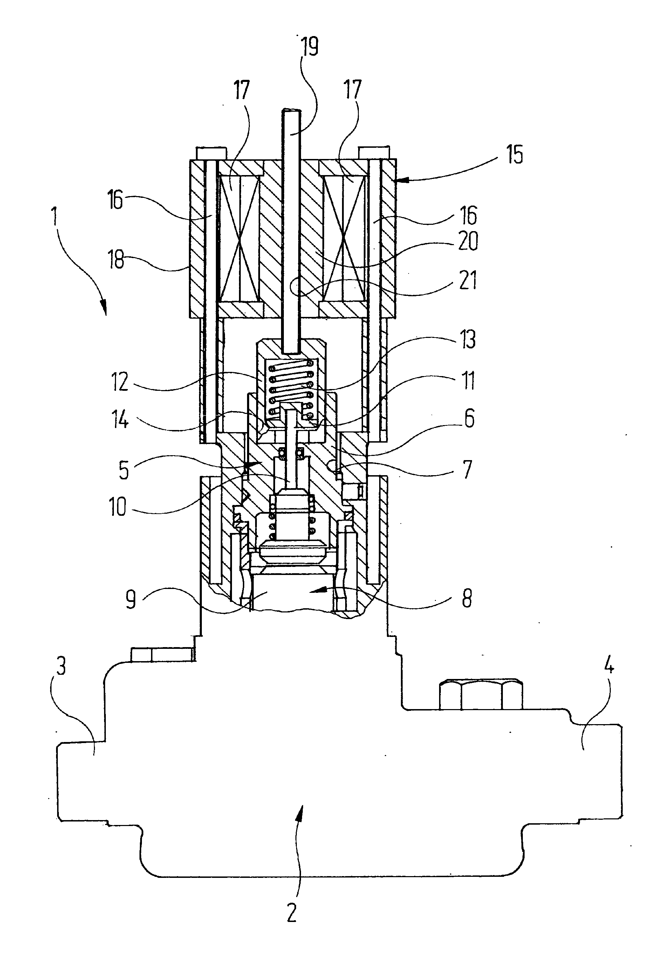

Ein Ausführungsbeispiel der Erfindung wird nachfolgend anhand der Zeichung näher erläutert; die einzige Figur zeigt ein sanitäres Thermostatventil, teilweise aufgeschnitten in Seitenansicht.

Die genaue Bauweise des in der Figur dargestellten sanitären Thermostatventils, das insgesamt mit dem Bezugszeichen 1 gekennzeichnet ist, ist im vorliegenden Zusammenhang ohne Interesse; sie ist, soweit nachfolgend nicht beschrieben, dem Fachmann bekannt. Es genügt zu wissen, dass das Thermostatventil 1 ein Gehäuse 2 aufweist, das einen Zulauf 3 für Kaltwasser und einen Zulauf 4 für Warmwasser besitzt. Nicht dargestellt ist der Auslauf, über den das auf eine bestimmte Temperatur geregelte Wasser das Thermostatventil 1 verlässt.

In dem Gehäuse 2 befindet sich ein Gehäuseeinsatz 5, der mit einem ein Außengewinde tragenden Hals 6 in eine Gewindebohrung 7 des Gehäuses 2 eingeschraubt ist. Im Innenraum des Einsatzes 5 ist ein als Thermostatelement dienendes Dehnstoffelement 8 bekannter Bauweise angeordnet und zwar so, dass es in axialer Richtung insgesamt verschoben werden kann. Das Dehnstoffelement 8 ist an seinem in der Zeichnung unteren Ende mit einem Doppelventilkegel 9 verbunden, der durch seine Axialbewegung das Mischungsverhältnis des das Thermostatventil 1 durchströmenden Wassers bestimmt.

Aus dem dem Doppelventilkegel 9 gegenüberliegenden Ende des Dehnstoffelementes 8 ist ein Druckstift 10 herausgeführt, der sich bei einer Erwärmung des in dem Dehnstoffelement 8 enthaltenen Wachses weiter aus dem Dehnstoffelement 8 herausschiebt, während er sich bei einer Abkühlung des Wachses in das Dehnstoffelement 8 zurückzieht.

Das Ende des dicht aus dem Einsatz 5 herausgeführten Druckstiftes 10 stützt sich an einem Federteller 11 ab, der in einem Federkäfig 12 axial beweglich angeordnet ist. Der Federteller 11 wird durch eine verhältnismäßig starke Spiralfeder 13 soweit wie möglich nach unten in die in der Zeichnung dargestellte Position gedrückt. Der Federkäfig 12 mit dem darin enthaltenen Federteller 11 und der Spiralfeder 13 dienen in an und für sich bekannter Weise als Sicherheitseinrichtung. Im vorliegenden Zusammenhang kann die Feder 13 als nicht kompressibel verstanden werden, so dass also eine Axialbewegung des Federkäfigs 12 sich unmittelbar in eine entsprechende Axialbewegung des Druckstiftes 10 und damit auch des gesamtes Dehnstoffelementes 8 umsetzt. Bei dieser Axialbewegung ist der Federkäfig 12 in seinem in der Zeichnung unteren Bereich in einer Sackbohrung 14 des Einsatzes 5 geführt. Durch die geschilderte Axialbewegung des Dehnstoffelementes 8, die durch Axialverschiebung des Federkäfiges 12 herbeigeführt werden kann, lässt sich die Solltemperatur des das Thermostatventil 1 verlassenden Mischwassers einstellen.

Während bei Thermostatventilen nach dem Stande der Technik die fragliche Axialbewegung entweder von Hand oder durch ein Getriebeelektromotor hervorgerufen wurde, ist bei dem dargestellten Thermostatventil 1 hierfür ein Linearaktuator vorgesehen, der mit dem Bezugszeichen 15 gekennzeichnet und mit mehreren Schrauben 16 auf dem Gehäuse 2 des Thermostatventiles 1 befestigt ist. Bei dem Linearaktuator 15 handelt es sich im Wesentlichen um einen handelsüblichen Schrittmotor, dessen Statorwicklungen 17 im Innenraum des Gehäuses 18 des Linearaktuators 15 konzentrisch um einen als Gewindestift ausgebildeten Rotor 19 angeordnet sind. Die Statorwicklungen 17 umgeben dabei einen mittleren Gehäuseeinsatz 20, der eine axial verlaufende Gewindebohrung 21 aufweist.

Die Funktionsweise des oben beschriebenen Thermostatventils 1 ist die folgende:

Wie bereits erwähnt, bestimmt die Axialposition des Dehnstoffelementes 8 innerhalb des Gehäuseeinsatzes 5 die Solltemperatur des ausfließenden Mischwassers. Soll diese verändert werden, werden die Statorwicklungen 17 des Linearaktuators 15 impulsweise bestromt. Mit jedem Impuls dreht sich der Rotor 19 um einen gewissen Winkel. Diese Verdrehung ist auf Grund der Gewindeverbindung mit dem Gehäuseeinsatz 20 mit einer Axialbewegung des Rotors 19 verbunden, je nach Drehsinn auf das Gehäuse 2 des Thermostatventiles 1 zu oder von diesem weg. Eine entsprechende Axialbewegung führen dann auch der Federkäfig 12 und auf Grund der im Wesentlichen starren Verbindung über die Spiralfeder 13 auch das Dehnstoffelement 8 durch. So lässt sich die Solltemperatur des Thermostatventiles 1 stufenweise verstellen, wobei die Feinheit der Stufung durch die Bauweise des Linearaktuators 15 vorgegeben ist.

Statt eines Schrittmotors kann im Linearaktuator 15 insbesondere auch ein DC-Motor mit Encoder verwendet werden.

## Patentansprüche

1. Sanitäres Thermostatventil mit
a) einem Gehäuse, das einen Kaltwasserzulauf, einen Warmwasserzulauf und einen Mischwasserauslauf besitzt;
b) einem im Gehäuse angeordneten, temperaturempfindlichen und vom Mischwasser anströmbaren Thermostatelement;
c) einem vom Thermostatelement gesteuerten Mischventil;
d) einem Einstellorgan für die Solltemperatur des Mischwassers, mit dem die Position des Thermostatelements im Gehäuse veränderbar ist;
e) einer elektrischen Betätigungseinrichtung für das Einstellorgan,
**dadurch gekennzeichnet, dass**
f) das elektrische Betätigungsorgan ein Linearaktuator (15) ist, dessen sich linear bewegendes Ausgangsorgan (19) direkt mit dem Einstellorgan (10 bis 14) verbunden ist.

2. Sanitäres Thermostatventil nach Anspruch 1, **dadurch gekennzeichnet, dass** der Linearaktuator (15) einen elektrischen Schrittmotor mit mehreren Statorwicklungen (17) und einem Rotor (19) umfasst, wobei der Rotor (19) ein Gewinde trägt, das in einem komplementären Gewinde (21) eines Gehäuseteils (20) verschraubbar ist, wodurch der Rotor (19) zum sich linear in Achsrichtung bewegenden Ausgangsorgan wird.
